(19) Europäisches Patentamt / European Patent Office / Office européen des brevets

(11) **EP 3 776 078 B1**

(12) **FASCICULE DE BREVET EUROPEEN**

(45) Date de publication et mention de la délivrance du brevet:
**20.08.2025 Bulletin 2025/34**

(21) Numéro de dépôt: **19716408.0**

(22) Date de dépôt: **08.04.2019**

(51) Classification Internationale des Brevets (IPC):
**G03B 15/05** (2021.01)

(52) Classification Coopérative des Brevets (CPC):
**G03B 15/05**

(86) Numéro de dépôt international:
**PCT/EP2019/058793**

(87) Numéro de publication internationale:
**WO 2019/193199 (10.10.2019 Gazette 2019/41)**

(54) **DISPOSITIF DE CAPTURE D'IMAGES MULTIPLES PRÉSENTANT CHACUNE UNE EXPOSITION À LA LUMIÈRE DIFFÉRENTE**

VORRICHTUNG ZUR AUFNAHME VON MEHREREN BILDERN JEDE MIT ANDERER LICHTBELEUCHTUNG

DEVICE FOR CAPTURING MULTIPLE IMAGES EACH HAVING A DIFFERENT LIGHT EXPOSURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.04.2018 FR 1853036**

(43) Date de publication de la demande:
**17.02.2021 Bulletin 2021/07**

(73) Titulaire: **Geode**
**69290 Saint-Genis-Les-Ollieres (FR)**

(72) Inventeurs:
• **ALLOZA, David**
**38000 Grenoble (FR)**
• **STRADELLA, Pascal**
**69003 LYON (FR)**
• **LIEFKE, Carole**
**69003 LYON (FR)**

(74) Mandataire: **Germain Maureau**
**12, rue Boileau**
**69006 Lyon (FR)**

(56) Documents cités:
| | |
|---|---|
| US-A- 2 747 459 | US-A- 2 747 459 |
| US-A1- 2004 233 421 | US-A1- 2004 233 421 |
| US-A1- 2012 154 672 | US-A1- 2012 154 672 |
| US-A1- 2014 340 572 | US-A1- 2014 340 572 |

## Description

### Domaine de l'invention

La présente invention se rapporte un dispositif de capture d'images multiples.

### Art antérieur

De manière connue, un dispositif permettant de capturer plusieurs images d'un même objet avec plusieurs expositions de lumière différentes est exploité sous le nom commercial TAC7 Scanner. Le dispositif décrit est en forme de dôme à l'intérieur duquel plusieurs émetteurs de lumière de type DEL ainsi que plusieurs appareils photographiques monochromatiques sont placés.

De manière connue, un dispositif permettant de capturer plusieurs images d'un même objet avec plusieurs expositions de lumière différentes fait l'objet du brevet US6654013 dans lequel est décrit un système graphique permettant de mettre en avant la perception des formes. Le système graphique se rapporte à une technique de création d'images d'affichage interactif d'objets exposés à différentes conditions de lumière afin de révéler les phénomènes de surface.

Le dispositif utilisé pour la création de l'affichage interactif est un dôme comportant plusieurs émetteurs de lumière ainsi qu'un orifice en son sommet afin d'y placer une unité de capture d'images.

Toutefois, ces solutions ne donnent pas une entière satisfaction.

La construction d'un dôme est délicate à réaliser et sa forme rend l'automatisation du processus difficile, ce qui rend le coût de production élevé. De plus un dôme est encombrant, ce qui implique plusieurs inconvénients notamment lors du transport.

Les documents US 2014/340572A1 et US 2004/233421A1 décrivent des exemples de l'état de la technique antérieure pertinents.

La présente invention a pour but de résoudre tout ou partie des inconvénients mentionnés ci-dessus.

### Exposé de l'invention

A cet effet, la présente invention concerne un dispositif de capture d'images multiples d'un objet disposée en une position de référence, chaque image présentant une exposition à la lumière différente, le dispositif comprenant :

un ensemble émetteur de lumière comprenant au moins une unité émettrice de lumière, l'ensemble émetteur de lumière étant disposé sur une surface plane ;
au moins une unité de capture d'images ;
une unité de contrôle configurée pour déclencher une pluralité de captures d'images successives à partir d'une position de prise de vue, et à chaque capture d'image, commander une unité émettrice de lumière de l'ensemble émetteur de lumière, de façon à obtenir au moins une caractéristique lumineuse de la lumière émise par l'unité émettrice de lumière déterminée en fonction de la distance entre une position d'éclairage de l'unité émettrice de lumière et la position de référence, l'intensité de la lumière émise depuis les positions d'éclairage dépendant de la distance les séparant de la position de référence afin d'obtenir, pour chacune des positions d'éclairage, une intensité de lumière reçue équivalente sur la position de référence.

Dans un système ou les différentes positions de la source de lumières sont distribuées sur un hémisphère, la distance de la source à la cible est constante.

Dans le système ici décrit, la construction simplifiée qui consiste à positionner la source de lumière sur différents points d'un plan entraine une variation de la distance de la source à la cible.

La conséquence de cette variation de distance est une variation, non voulue, d'intensité lumineuse reçue par la cible.

Le système décrit intègre un algorithme compensant dans une approximation acceptable cette variation d'éclairage non voulue en modulant l'intensité lumineuse de la source à l'inverse de la variation entrainée par cette distance non constante.

Ainsi les sources de lumière placées proches d'un emplacement génèreront un éclairage bien moins important que celles placées en périphérie du système.

Grâce à ces dispositions, l'invention fournit une solution dont l'automatisation est simplifiée, dont le coût de production est faible et dont l'encombrement est minimum.

Selon un aspect de l'invention, la caractéristique lumineuse considérée correspond à une intensité lumineuse de l'unité émettrice.

Selon une possibilité, l'intensité lumineuse de la lumière émise par les unités émettrices de lumière peut ainsi être calculée en fonction d'un rapport entre la distance entre une position d'éclairage d'une unité émettrice et la position de référence.

En particulier, l'intensité lumineuse commandée pour une unité émettrice de lumière peut être modulée en fonction d'un rapport :

$$\frac{d}{d_{max}}$$

La valeur d correspond à la distance entre la position d'éclairage de l'unité émettrice et la position de référence. La valeur $d_{max}$ correspond à la distance entre la position d'éclairage d'une unité émettrice la plus éloignée de la position de référence parmi la pluralité de position d'éclairage de l'ensemble d'unité émettrice et la position de référence.

Ainsi, l'intensité lumineuse I peut être déterminée comme une fonction f du rapport décrit précédemment et d'une intensité lumineuse maximale I$_{max}$ disponible ou déterminée pour une unité émettrice :

$$I = f\left(\frac{d}{d_{max}}, I_{max}\right)$$

Selon une possibilité, l'intensité lumineuse commandée pour une unité émettrice de lumière peut être modulée en fonction du carré du rapport décrit précédemment, c'est-à-dire en fonction d'une grandeur :

$$\left(\frac{d}{d_{max}}\right)^2$$

Ainsi, l'intensité lumineuse I peut être déterminée comme une fonction f du carré du rapport décrit précédemment et d'une intensité lumineuse maximale I$_{max}$ disponible ou déterminée pour une unité émettrice :

$$I = f\left(\left(\frac{d}{d_{max}}\right)^2, I_{max}\right)$$

Selon un exemple particulier non limitatif d'expression de la fonction f, l'intensité lumineuse peut être déterminée de la façon suivante :

$$I = \left(\frac{d}{d_{max}}\right)^2 I_{max}$$

Bien entendu, un calcul approximé de la fonction f peut être utilisé de façon à faciliter la mise en œuvre de la détermination.

L'unité de commande de commande est ainsi configurée pour commander l'intensité lumineuse d'éclairage pour chacune des unités émettrice en modulant l'intensité en utilisant la fonction ci-dessus.

Selon un aspect de l'invention, les unités émettrices de lumière peuvent être de toute sorte tel que des diodes électroluminescentes et/ou des lampes à xénon par exemple.

Selon un aspect de l'invention, la surface plane sur laquelle sont disposées les unités émettrices de lumière présente au moins un emplacement de manière à permettre l'insertion d'au moins une unité de capture d'images.

Selon un aspect de l'invention, l'au moins une unité de capture d'images peut être de toute sorte tel qu'un appareil photographique numérique ou un appareil photographique argentique par exemple.

Selon un mode de réalisation, l'au moins une unité de capture d'images est commandée par l'unité de contrôle.

L'invention concerne également un procédé de capture d'images multiples présentant chacune une exposition à la lumière différente, comportant les étapes suivantes :

positionnement d'un objet à photographier en une position de référence ;
déclenchement d'une pluralité de captures d'images successives à partir d'une position de prise de vue ;
pour chaque capture d'image, réaliser un éclairage à partir d'une position d'éclairage respective, lors de la capture d'image, la pluralité de capture d'images étant associée respectivement à une pluralité de positions d'éclairage comprises dans un plan d'éclairage ; et
pour chaque capture d'image, commander l'éclairage réalisé à partir de la position d'éclairage respective pour obtenir au moins une caractéristique lumineuse de l'éclairage déterminée en fonction de la distance entre la position d'éclairage et la position de référence, l'intensité de la lumière émise depuis les positions d'éclairage dépendant de la distance les séparant de la position de référence afin d'obtenir, pour chacune des positions d'éclairage, une intensité de lumière reçue équivalente sur la position de référence.

Selon un mode de réalisation, le déclenchement de l'éclairage à chaque capteur d'image est réalisé selon des caractéristiques lumineuses différentes en fonction de la distance entre la position de référence et la position d'éclairage correspondant à la capture d'image.

La définition de la fonction f détaillée précédemment peut être utilisée.

Selon un aspect de l'invention, le déclenchement des unités émettrices de lumière selon des caractéristiques lumineuses différentes en fonction de la distance qui les sépare de la position de référence permet de simuler un éclairage naturel.

Selon l'invention, l'intensité de la lumière émise par les unités émettrices de lumière dépend de la distance les séparant de la position de référence afin d'obtenir, pour chacune des unités émettrices lumière, une intensité de lumière reçue équivalente sur la position de référence.

Selon un aspect de l'invention, les caractéristiques de la lumière émise par les unités émettrices de lumière peuvent varier tel que le spectre de la lumière émise varie par exemple.

Selon un aspect de l'invention, la variation du spectre de lumière émise par les unités émettrices de lumière permet de mettre en exergue certains aspects de l'objet dont l'image est à capturer.

Selon un mode de réalisation, le déclenchement de l'éclairage depuis les positions d'éclairage et des captures d'image correspondantes est réalisé de manière synchrone.

Selon un aspect de l'invention, le déclenchement synchronisé des unités émettrices de lumière et de l'au moins une unité de capture d'images permet d'obtenir autant d'expositions à la lumière que d'unités émettrices de lumière.

Ainsi, il est notamment possible de réaliser un ensemble de captures d'images dans lequel chaque capture d'image de l'ensemble est synchronisée avec la commande d'éclairage d'une unité de l'ensemble d'unité d'éclairages.

Les différents aspects définis ci-dessus non incompatibles peuvent être combinés.

**Brève description des figures**

L'invention sera encore mieux comprise à l'aide de la description détaillée qui est exposée ci-dessous en regard du dessin annexé dans lequel :

- la figure 1 représente un dispositif de capture d'images multiples conformément à la présente invention ; et
- la figure 2 représente un support plan pour unités émettrices de lumière conformément à la présente invention.

**Description en référence aux figures**

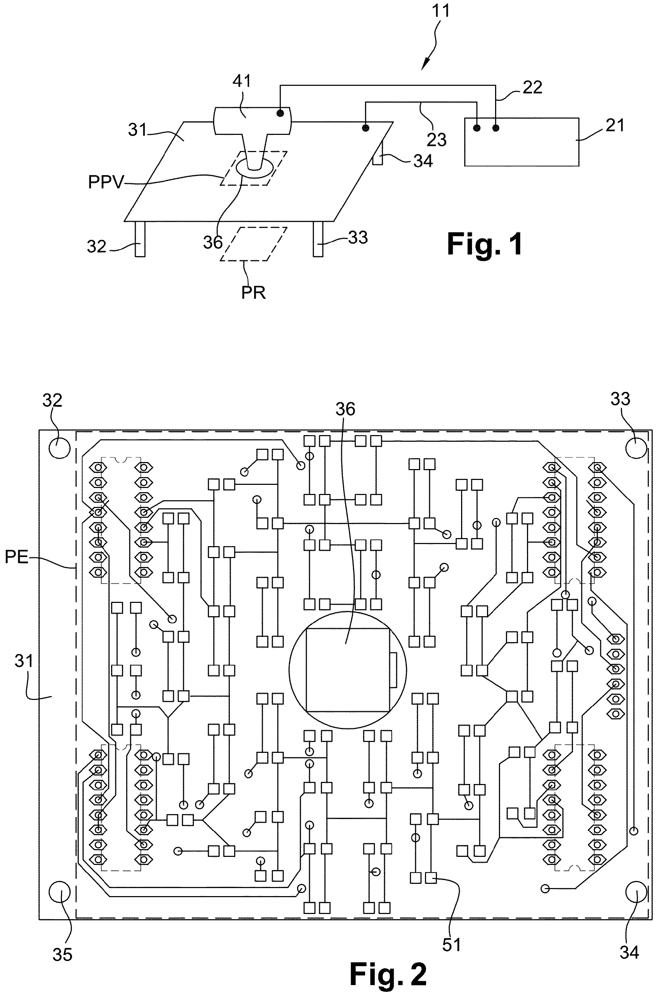

L'invention sera mieux comprise à l'aide de la description détaillée qui est exposée ci-dessous en regard du dessin annexé dans lequel :
Comme illustré dans la figure 1, le dispositif 11 capture des images multiples d'un objet disposé en une position de référence PR, chaque image présente une exposition à la lumière différente.

Le dispositif comprend notamment un ensemble d'unités émettrices de lumière 51 disposées sur une surface plane 31 ainsi que au moins une unité de capture d'images 41.

L'au moins une unité de capture d'images 41 peut être de toute sorte tel qu'un appareil photographique numérique ou caméra vidéo ou capteur numérique CMOS/CCD ou un appareil photographique argentique par exemple. Dans le mode de réalisation de l'invention illustré dans les figures 1 et 2, l'unité de capture d'images 41 est un appareil photographique numérique.

Les unités émettrices de lumière 51 peuvent être de toute sorte tel que des diodes électroluminescentes et/ou des lampes à xénon par exemple. Dans le mode de réalisation de l'invention illustré dans les figures 1 et 2, les unités émettrices de lumière 51 sont des diodes électroluminescentes.

Comme illustré dans la figure 2, à titre d'exemple non limitatif, l'ensemble des unités émettrices de lumière 51 disposé sur une surface plane 31 est constitué de 64 unités émettrices de lumière.

Avantageusement, l'ensemble d'unités émettrices de lumière 51 comprend au minimum une unité émettrice de lumière 51.

La surface plane 31 sur laquelle sont disposées les unités émettrices de lumière 51 présente au moins un emplacement 36 de manière à permettre l'insertion d'au moins une unité de capture d'images 41.

Afin de commander l'ensemble des unités émettrices de lumière 51 pour obtenir au moins une caractéristique lumineuse déterminée en fonction de la distance entre une position d'éclairage de l'unité émettrice de lumière et la position de référence PR, ainsi que pour commander le déclenchement de l'au moins une unité de capture d'images 41 et des unités émettrices de lumière 51, le dispositif comprend également une unité de contrôle 21.

L'intensité lumineuse de la lumière émise par les unités émettrices de lumière peut ainsi être calculée et commandée en fonction d'un rapport entre la distance entre une position d'éclairage d'une unité émettrice et la position de référence.

L'intensité lumineuse I pour une unité émettrice peut être déterminée comme une fonction f du rapport décrit précédemment et d'une intensité lumineuse maximale $I_{max}$ disponible ou déterminée pour une unité émettrice :

$$ I = f\left(\frac{d}{d_{max}}, I_{max}\right) $$

La valeur d correspond à la distance entre la position d'éclairage de l'unité émettrice et la position de référence. La valeur $d_{max}$ correspond à la distance entre la position d'éclairage d'une unité émettrice la plus éloignée de la position de référence parmi la pluralité de position d'éclairage de l'ensemble d'unité émettrice et la position de référence.

Selon un mode particulier d'expression de la fonction f, l'intensité lumineuse peut être déterminée de la façon suivante :

$$ I = \left(\frac{d}{d_{max}}\right)^2 I_{max} $$

Bien entendu, un calcul approximé de la fonction f peut être utilisé de façon à faciliter la mise en œuvre de la détermination. Selon un mode de réalisation, la distance entre la position de référence PR et l'unité de capture d'images 41 ne varie pas. Seul la distance entre chaque unité émettrice de lumière 51 et la position de référence PR change. En effet, les unités émettrices de lumière 51 sont disposées sur la surface plane 31 à des distances différentes de la position de référence PR afin d'obtenir un rendu plus homogène.

Selon un mode de réalisation, le déclenchement de l'au moins une unité de capture d'image 41 et des unités émettrices de lumière 51 est réalisé par l'unité de capture d'image 41.

Une telle disposition permet d'obtenir un éclairage permanent, en effet, chaque unité émettrice de lumière 51 est allumée tour à tour de manière à ce qu'il y ait toujours une unité émettrice de lumière 51 allumée. Une telle disposition permet un gain de temps pour réaliser une capture d'images multiples.

Ci-après sera décrit un procédé conformément à la présente invention.

Afin de réaliser la capture d'images multiples présentant chacune une exposition à la lumière différente, plusieurs étapes sont réalisées.

La première étape consiste à positionner un objet à photographier sur une position de référence PR.

La deuxième étape consiste en la capture d'une pluralité d'images à partir d'une position de prise de vue PPV à l'aide de l'unité de capture d'image 41.

Lors de cette deuxième étape, pour chaque image capturée, un éclairage est réalisé, à partir d'une position d'éclairage, à l'aide des unités émettrices de lumière 51. La pluralité de capture d'images est associée avec une pluralité de position d'éclairage comprise dans un plan d'éclairage PE.

Un éclairage est réalisé à partir de la pluralité de position d'éclairage PE à l'aide des unités émettrices de lumière 51 avec au moins une intensité déterminée en fonction de la distance entre la position d'éclairage PE et la position de référence PR.

L'unité de commande 21 déclenche de manière synchrone les unités émettrices de lumière 51 et l'au moins une unité de capture d'images 41 afin d'obtenir autant d'expositions à la lumière que d'unités émettrices de lumière.

Avantageusement, plus le nombre d'unités émettrices de lumière 51 est grand et plus grand sera le nombre d'images capturées. Cela permet d'obtenir un rendu proche de la réalité.

Selon un mode de réalisation non représenté, le dispositif de capture d'image multiple comprend une unique unité émettrice de lumière 51 se déplaçant sur un plan défini par la surface plane 31 à l'aide d'une unité de déplacement tel qu'un système de rail motorisé à deux axes par exemple. Avantageusement, un dispositif de capture d'images multiples comprenant une unique unité émettrice de lumière 51 permet de réduire le poids, la taille et le coût dudit dispositif.

Selon un mode de réalisation non représenté, le dispositif de capture d'image multiple comprend un sous ensemble d'unités émettrices de lumière 51 comportant plusieurs unités émettrices de lumière 51, ledit sous ensemble se déplaçant sur un plan défini par la surface plane 31 à l'aide d'une unité de déplacement tel qu'un système de rail motorisé à deux axes par exemple. Avantageusement, un dispositif de capture d'images multiples comprenant un sous ensemble d'unités émettrices de lumière 51 permet de réduire le poids, la taille et le coût dudit dispositif.

Bien entendu, l'invention n'est pas limitée aux modes de réalisation représentés et décrits ci-avant, mais en couvre au contraire toutes les variantes.

**Revendications**

**1.** Dispositif de capture d'images multiples d'un objet disposé en une position de référence (PR), chaque image présentant une exposition à la lumière différente (11), le dispositif comprenant :

• un ensemble émetteur de lumière comprenant au moins une unité émettrice de lumière (51), l'ensemble émetteur de lumière étant disposé sur une surface plane (31) ;
• au moins une unité de capture d'images (41) ;
• une unité de contrôle (21) configurée pour déclencher une pluralité de captures d'images successives à partir d'une position de prise de vue (PPV), et à chaque capture d'image, commander une unité émettrice de lumière (51) de l'ensemble émetteur de lumière, de façon à obtenir au moins une caractéristique lumineuse de la lumière émise par l'unité émettrice de lumière déterminée en fonction de la distance entre une position d'éclairage de l'unité émettrice de lumière et la position de référence (PR), l'intensité de la lumière émise depuis les positions d'éclairage dépendant de la distance les séparant de la position de référence afin d'obtenir, pour chacune des positions d'éclairage, une intensité de lumière reçue équivalente sur la position de référence.

**2.** Dispositif selon la revendication 1, dans lequel l'au moins une unité de capture d'images (41) est commandée par l'unité de contrôle (21).

**3.** Procédé de capture d'images multiples présentant chacune une exposition à la lumière différente, comportant les étapes suivantes :

• positionnement d'un objet à photographier en une position de référence (PR) ;
• déclenchement d'une pluralité de captures d'images successives à partir d'une position de prise de vue (PPV) ;
• pour chaque capture d'image, réaliser un éclairage à partir d'une position d'éclairage respective, lors de la capture d'image, la pluralité de capture d'images étant associée respectivement à une pluralité de positions d'éclairage comprises dans un plan d'éclairage (PE) ; et
• pour chaque capture d'image, commander l'éclairage réalisé à partir de la position d'éclairage respective pour obtenir au moins une caractéristique lumineuse de l'éclairage déterminée en fonction de la distance entre la position d'éclairage et la position de référence, l'intensité de la lumière émise depuis les positions d'éclairage dépendant de la distance les séparant de la position de référence afin d'obtenir, pour chacune des positions d'éclairage, une intensité de lumière reçue équivalente sur la position de référence.

4. Procédé selon la revendication 3, dans lequel l'éclairage à chaque capture d'image est réalisé selon des caractéristiques lumineuses différentes en fonction de la distance entre la position de référence (PR) et la position d'éclairage correspondant à la capture d'image.

5. Procédé selon l'une quelconque des revendications 3 et 4, dans lequel le déclenchement de l'éclairage depuis les positions d'éclairage et des captures d'image correspondantes est réalisé de manière synchrone.

**Patentansprüche**

1. Vorrichtung zur Aufnahme mehrerer Bilder eines in einer Referenzposition (PR) angeordneten Objekts, wobei jedes Bild eine unterschiedliche Lichtbelichtung (11) aufweist, wobei die Vorrichtung Folgendes umfasst:

   • eine Lichtemitteranordnung, die mindestens eine Lichtemittereinheit (51) umfasst, wobei die Lichtemitteranordnung auf einer ebenen Oberfläche (31) angeordnet ist;
   • mindestens eine Bildaufnahmeeinheit (41);
   • eine Steuereinheit (21), die so eingerichtet ist, dass sie eine Vielzahl von aufeinanderfolgenden Bildaufnahmen von einer Aufnahmeposition (PPV) aus auslöst und bei jeder Bildaufnahme eine Lichtemittereinheit (51) der Lichtemitteranordnung steuert, so dass mindestens eine Lichtcharakteristik des von der Lichtemittereinheit emittierten Lichts erhalten wird, die in Abhängigkeit von der Entfernung zwischen einer Beleuchtungsposition der Lichtemittereinheit und der Referenzposition (PR) bestimmt wird, wobei die Intensität des von den Beleuchtungspositionen emittierten Lichts von der Entfernung zwischen ihnen und der Referenzposition abhängt, um für jede der Beleuchtungspositionen eine äquivalente Intensität des empfangenen Lichts an der Referenzposition zu erhalten.

2. Vorrichtung nach Anspruch 1, wobei die mindestens eine Bildaufnahmeeinheit (41) von der Steuereinheit (21) gesteuert wird.

3. Verfahren zur Aufnahme mehrerer Bilder mit jeweils unterschiedlicher Lichtbelichtung, umfassend die folgenden Schritte:

   • Positionieren eines zu fotografierenden Objekts in einer Referenzposition (PR)
   • Auslösen einer Vielzahl von aufeinanderfolgenden Bildaufnahmen von einer Aufnahmeposition (PPV) aus;
   • für jede Bildaufnahme, Durchführen einer Beleuchtung von einer jeweiligen Beleuchtungsposition aus während der Bildaufnahme, wobei die Vielzahl von Bildaufnahmen jeweils einer Vielzahl von Beleuchtungspositionen zugeordnet ist, die in einer Beleuchtungsebene (PE) enthalten sind; und
   • für jede Bildaufnahme, Steuern der Beleuchtung, die von der jeweiligen Beleuchtungsposition aus durchgeführt wird, um mindestens eine Lichtcharakteristik der Beleuchtung zu erhalten, die in Abhängigkeit von der Entfernung zwischen der Beleuchtungsposition und der Referenzposition bestimmt wird, wobei die Intensität des von den Beleuchtungspositionen emittierten Lichts von der Entfernung zwischen ihnen und der Referenzposition abhängt, um für jede der Beleuchtungspositionen eine äquivalente Intensität des empfangenen Lichts an der Referenzposition zu erhalten.

4. Verfahren nach Anspruch 3, wobei die Beleuchtung bei jeder Bildaufnahme mit unterschiedlichen Lichtcharakteristiken in Abhängigkeit von der Entfernung zwischen der Referenzposition (PR) und der Beleuchtungsposition, die der Bildaufnahme entspricht, durchgeführt wird.

5. Verfahren nach einem der Ansprüche 3 und 4, wobei das Auslösen der Beleuchtung von den Beleuchtungspositionen und der entsprechenden Bildaufnahmen synchron durchgeführt wird.

**Claims**

1. A device for capturing multiple images of an object arranged in a reference position (PR), each image having a different light exposure (11), the device comprising:

   • a light emitting assembly comprising at least one light emitting unit (51), the light emitting assembly being arranged on a flat surface (31);
   • at least one image capturing unit (41);
   • a control unit (21) configured to trigger a plurality of successive image captures from a shooting position (PPV), and at each image capture, control a light emitting unit (51) of the light emitting assembly, so as to obtain at least one luminous characteristic of the light emitted by the light emitting unit determined as a function of the distance between a lighting position of the light emitting unit and the reference position (PR), the intensity of the light emitted from the lighting positions depending on the distance separating them from the reference position in order to obtain, for each of the lighting positions, an equivalent received light intensity at the reference position.

2. The device according to claim 1, wherein the at least one image capture unit (41) is controlled by the control unit (21).

3. A method for capturing multiple images, each having a different light exposure, including the following steps:

   • positioning an object to be photographed in a reference position (PR);
   • triggering a plurality of successive image captures from a shooting position (PPV):
   • for each image capture, performing lighting from a respective lighting position, during the image capture, the plurality of image captures being respectively associated with a plurality of lighting positions included in a lighting plane (PE); and
   • for each image capture, controlling the lighting performed from the respective lighting position to obtain at least one luminous characteristic of the lighting determined as a function of the distance between the lighting position and the reference position, the intensity of the light emitted from the lighting positions depending on the distance separating them from the reference position in order to obtain, for each of the lighting positions, an equivalent received light intensity at the reference position.

4. The method according to claim 3, wherein the lighting at each image capture is performed according to different luminous characteristics as a function of the distance between the reference position (PR) and the lighting position corresponding to the image capture.

5. The method according to any one of claims 3 and 4, wherein the triggering of the lighting from the lighting positions and the corresponding image captures is performed synchronously.

**Fig. 1**

**Fig. 2**

## EP 3 776 078 B1

### RÉFÉRENCES CITÉES DANS LA DESCRIPTION

**Documents brevets cités dans la description**

- US 6654013 B
- US 2014340572 A1
- US 2004233421 A1